# EUROPEAN PATENT APPLICATION

(11) **EP 2 814 128 A1**
(43) Date of publication of application: **17.12.2014**
(21) Application number: 12868005.5
(22) Date of filing: 10.10.2012
(51) Int. Cl.: H02G 11/00, H01M 10/46, H02G 11/02, H02J 7/00, B60L 11/18

(54) **APPARATUS FOR HOUSING CHARGING CABLE**

(30) Priority: 06.02.2012 JP 2012023221; 28.05.2012 JP 2012121004
(71) Applicant: Chuo Hatsujo Kabushiki Kaisha, Nagoya-shi, Aichi 458-8505 (JP)
(72) Inventor: MIZUNO, Eiji, Nagoya-shi Aichi 458-8505 (JP); HIRATA, Yuichi, Nagoya-shi Aichi 458-8505 (JP)
(74) Representative: Kramer - Barske - Schmidtchen
(86) International application number: PCT/JP2012/076226
(87) International publication number: WO 2013/118347

(57) **Abstract**

Provided is a charging-cable storage device configured to store a charging cable for use in an electrically-driven vehicle having an electric motor for traveling. The charging-cable storage device includes a holder-side socket provided with fixed contacts to be connected to a side of a charging power supply, a holder provided with the holder-side socket, a reel that is attachably and detachably attached to the holder and that includes a rotating drum to wind up the charging cable, and a reel-side socket that is provided to the reel and is provided with movable contacts to be displaced in a slidably contacting manner with respect to the fixed contacts in conjunction with a rotation of the rotating drum in a contact state with the fixed contacts.

## Description

### CROSS-REFERENCE TO RELATED APPLICATIONS

This international application claims the benefit of Japanese Patent Application No. 2012-023221 filed February 6, 2012 in the Japan Patent Office and the benefit of Japanese Patent Application No. 2012-121004 filed May 28, 2012 in the Japan Patent Office, and the entire contents of Japanese Patent Application No. 2012-023221 and Japanese Patent Application No. 2012-121004 are incorporated herein by reference.

### TECHNICAL FIELD

The present invention relates to a storage device for storing a charging cable for an electrically-driven vehicle.

The electrically-driven vehicle means a vehicle having an electric motor for traveling. Specifically, the electrically-driven vehicle means, for example, an electric vehicle having only an electric motor as a driving source, a hybrid vehicle having an electric motor and an internal combustion engine as driving sources, and the like.

### BACKGROUND ART

For example, the invention according to Patent Document 1 (the invention relating to a charging-cable storage device) includes a charging cable having a vehicle-side connector (socket) provided at one end thereof and a charging-device-side connector (socket) provided at the other end thereof, a rotating drum around which the charging cable is wound and held, and a housing to rotatably hold the rotating drum. The vehicle-side connector (socket) is connected to a connector provided to an electrically-driven vehicle (specifically, a plug-in hybrid vehicle). The charging-device-side connector (socket) is connected to a connector provided to a charging power supply.

When charging the electrically-driven vehicle, it is necessary to pull out the charging cable wound around the rotating drum and attach the vehicle-side connector to the electrically-driven vehicle, and to attach the power-supply-side connector to the charging device, in a state in which the entirety of the storage device is fixed to the charging device provided to the charging power supply.

### PRIOR ART DOCUMENTS

### PATENT DOCUMENTS

Patent Document 1: Japanese Unexamined Patent Application Publication No. 2010-115037

### SUMMARY OF THE INVENTION

### PROBLEMS TO BE SOLVED BY THE INVENTION

Generally, an electrically-driven vehicle is provided with a charging cable as standard equipment. Mileage of an electrically-driven vehicle is not as excellent as that of a vehicle having an internal combustion engine as a driving source, and thus, it is preferred to always have a charging cable stored in the trunk or the like in preparation for power shortage.

However, the charging cable provided as standard equipment is generally provided as a lone cable and is long in length. Thus, the charging cable has difficulties in storability and loadability when being stored in the trunk or the like.

Especially, the invention according to Patent Document 1 has a problem in terms of loadability because it is necessary to load the entirety of the storage device in the vehicle in addition to the charging cable provided as standard equipment.

It is preferred to improve storability and loadability of the charging cable.

### MEANS FOR SOLVING THE PROBLEMS

The present invention relates to a storage device configured to store a charging cable (3) for use in an electrically-driven vehicle having an electric motor for traveling. The storage device includes a holder (10) that includes a holder-side socket (11) provided with fixed contacts (11A to 11C) to be connected to a side of a charging power supply, a reel (20) that is attachably and detachably attached to the holder (10) and that includes a rotating drum (23) to wind up the charging cable (3), and a reel-side socket (25) that is provided to the reel (20) and is provided with movable contacts (25A to 25C) to be displaced in a slidably contacting manner with respect to the fixed contacts (11A to 11C) in conjunction with a rotation of the rotating drum (23) in a contact state with the fixed contacts (11A to 11 C).

Due to such a configuration, in the present invention, it is advisable to set the holder (10) in a place, such as a garage and a parking lot, where charging can be performed, and to store (load) solely the reel (20) in the trunk or the like because the charging cable (3) is stored in a wound-up state and the reel (20) is attachable to and detachable from the holder (10).

Moreover, in the present invention, the reel-side socket (25) can be easily fitted to the holder-side socket (11) regardless of a position of the reel-side socket (25) with respect to the holder-side socket (11) because the movable contacts (25A to 25C) can slidably contact the fixed contacts (11A to 11C).

Thus, even when the reel-side socket (25) rotates after the reel (20) is detached from the holder (10), a problem does not occur such as a failure to fit the reel-side socket (25) to the holder-side socket (11) when the reel (20) is being attached to the holder (10) on the next occasion.

Accordingly, in the present invention, the reel-side socket (25) can be easily fitted to the holder-side socket (11) to thereby enable workability for attaching the reel (20) to be improved, and storability and loadability of the charging cable (3) is improved by allowing the reel (20) to be attachable to and detachable from the holder (10).

The above reference numerals in parentheses are those showing an example of correspondence relationships with specific implementations described in embodiments to be described later. Thus, the configuration of the present invention is not limited to the specific implementations indicated with the above reference numerals in the parentheses.

The embodiments of the present invention will be described below, by way of example, with reference to the drawings. It is to be noted that invention-specifying matters and the like described in the claims are not limited to the specific implementation, structures, and the like shown in the embodiments below.

### BRIEF DESCRIPTION OF THE DRAWINGS

FIG. 1 is a perspective view of a storage device according to an embodiment of the present invention.
FIG. 2 is a front perspective view of a holder according to the embodiment of the present invention.
FIG. 3 is a front perspective view of a reel according to the embodiment of the present invention.
FIG. 4 is a rear perspective view of the reel according to the embodiment of the present invention.
FIG. 5 is a sectional view of the reel according to the embodiment of the present invention.
FIGS. 6A and 6B are diagrams showing fixed contacts according to the first embodiment of the present invention, and FIG. 6C is a diagram showing movable contacts according to the first embodiment of the present invention.
FIG. 7A is a diagram showing a state in which power switches are open, and FIG. 7B is a diagram showing a state in which the power switches are closed.
FIG. 8 is an exploded perspective view of fixed contacts and movable contacts according to a second embodiment of the present invention.
FIG. 9 is an exploded perspective view of the fixed contacts and the movable contacts according to the second embodiment of the present invention.
FIG. 10 is a diagram showing the fixed contacts and the movable contacts according to the second embodiment of the present invention.
FIGS. 11A to 11C are diagrams showing the fixed contacts and the movable contacts according to the second embodiment of the present invention.
FIGS. 12A and 12B are diagrams showing fixed contacts and movable contacts according to a third embodiment of the present invention.
FIGS. 13A and 13B are diagrams showing movable contacts according to a fourth embodiment of the present invention, and FIG. 13C is a diagram showing fixed contacts according to the fourth embodiment of the present invention.
FIG. 14 is a diagram showing features of a storage device according to a fifth embodiment.
FIG. 15 is a diagram showing features of the storage device according to the fifth embodiment.
FIG. 16 is a front perspective view of a storage device according to a sixth embodiment.
FIG. 17 is a sectional view of the storage device according to the sixth embodiment.

### EXPLANATION OF REFERENCE NUMERALS

1... storage device, 3...charging cable, 3A... charging control box, 3B...terminal-side cable, 3C...wound-up-side cable, 3D...terminal connector, 3E...vehicle-side connector, 10...holder, 11...holder-side socket, 11A-11C...fixed contact, 11D...power switch, 11E...contacting portion, 11F...contacted portion, 15A...support portion, 15B...hook portion, 15C...arm portion, 15D...arm portion, 15E..concave portion, 15F...protruding portion, 20...reel, 21...back plate, 21A...concave portion, 21B...engagement portion, 21C...protruding portion, 21E...grip portion, 21D...release button, 21F...support portion, 21G...locking hook portion, 23...rotating drum, 23A...drum plate, 23B...wind-up rim, 23C...flange portion, 23D...fitting portion, 23E...fixing portion, 23F...cable-side connector, 25...reel-side socket, 25A-25C...movable contact, 25D...terminal rod

### MODE FOR CARRYING OUT THE INVENTION

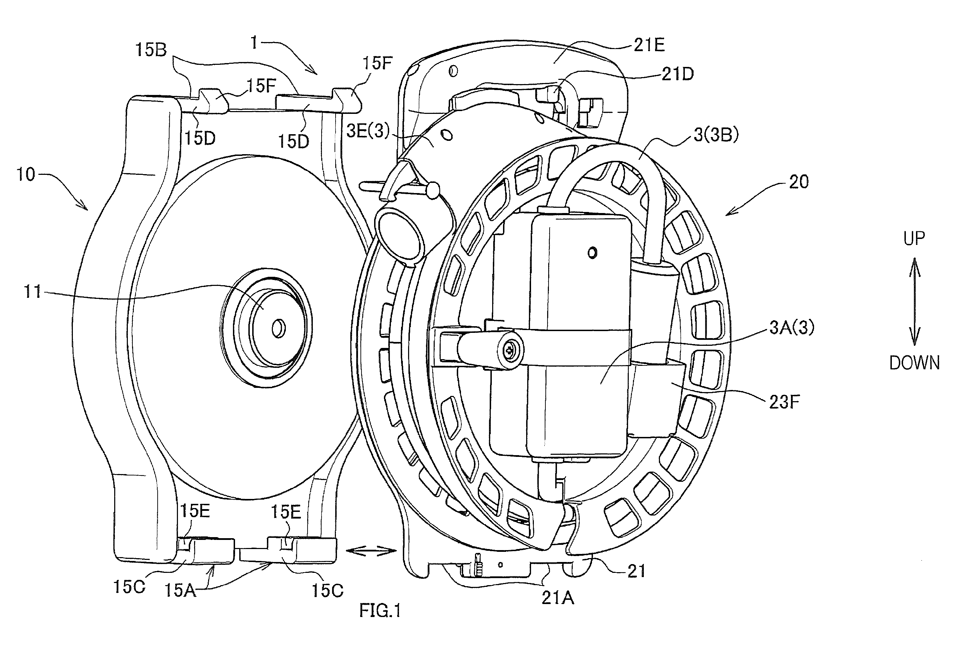

As shown in FIG. 1, a storage device 1 according to the present embodiment is a device to store a charging cable 3 for an electrically-driven vehicle (a plug-in hybrid vehicle and the like).

### (First Embodiment)

### 1. Structure of Charging-Cable Storage Device

### 1.1. Overview of Charging-Cable Storage Device

As shown in FIG. 1, the storage device 1 according to the present embodiment is configured to include a holder 10, a reel 20, and the like. The reel 20 is attachable to and detachable from the holder 10. The reel 20 is attached to the holder 10 when charging of an electrically-driven vehicle is performed.

### 1.2. Structure of Holder

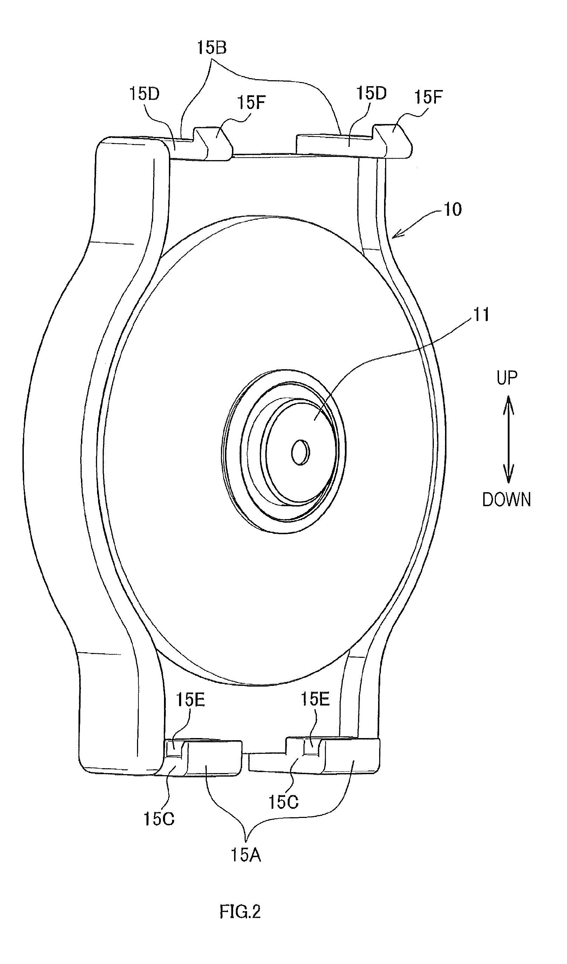

As shown in FIG. 2, a holder-side socket 11 is provided substantially in the center of the holder 10. The holder-side socket 11 is electrically connected to a power-supply-side cable (not shown) to be electrically connected to a charging power supply (not shown).

A support portion 15A and a hook portion 15B to fix the reel 20 to the holder 10 are respectively provided at a bottom end side and a top end side of the holder 10.

The support portion 15A supports a bottom end side of the reel 20, whereas the hook portion 15B is engaged with a top end side of the reel 20 to hold the top end side. This allows the entirety of the reel 20 to be held by the support portion 15A and the hook portion 15B.

As shown in FIG. 1, the support portion 15A includes an arm portion 15C. The arm portion 15C protrudes from the holder 10 toward the reel 20, and has a concave portion 15E at a protruding side. The hook portion 15B includes an arm portion 15D. The arm portion 15D is a hook-like member that protrudes from the holder 10 toward the reel 20 and that has a protruding portion 15F at a leading end side of the arm portion 15D in a protruding direction thereof.

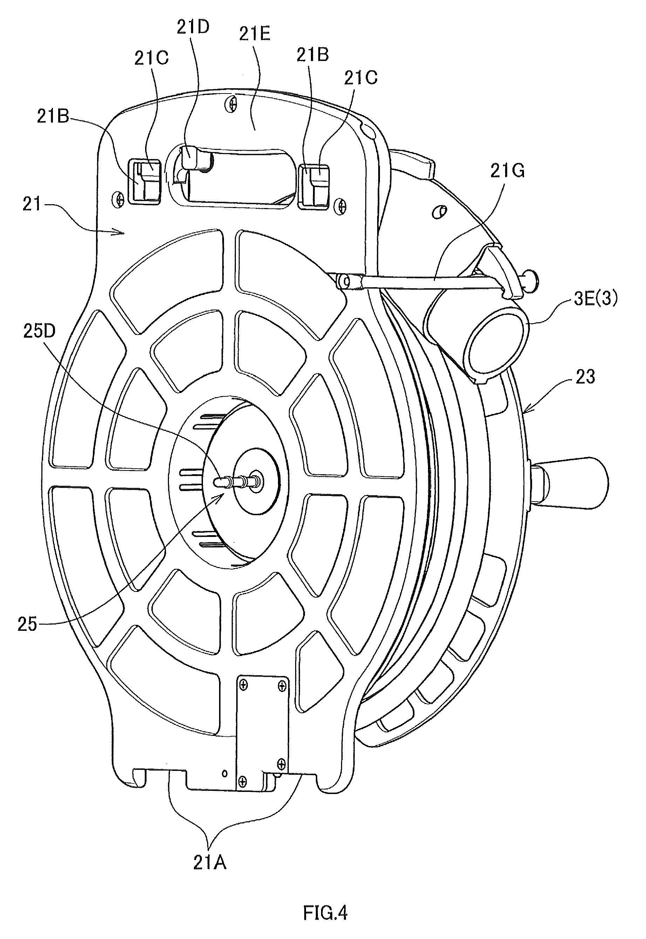

As shown in FIG. 4, provided in a back plate 21 of the reel 20 are a concave portion 21A capable of being engaged with the concave portion 15E in the support portion 15A, and an engagement portion 21B having a hole shape capable of being engaged with the hook portion 15B.

A protruding portion 21C to be engaged with the protruding portion 15F is provided in the engagement portion 21B. The protruding portion 21C is pressed by a spring (not shown) against a position in which engagement with the protruding portion 15F is enabled.

When the reel 20 is being attached to the holder 10, the concave portion 21A of the reel 20 is fitted to the support portion 15A, and in such a state, the reel 20 is caused to swing about the support portion 15A as a supporting point such that the reel 20 is pressed toward the holder 10. In this way, the hook portion 15B is fitted into the engagement portion 21B, and the protruding portion 21C in the reel 20 and the protruding portion 15F in the holder 10 are engaged with each other. As a result, the reel 20 is fixed to the holder 10.

When the reel 20 is being detached from the holder 10, the engagement between the protruding portion 21C and the protruding portion 15F is released by operation of a release button 21D provided to a grip portion 21E of the reel 20 (the back plate 21). In such a state, the reel 20 only has to be caused to swing about the support portion 15A as a supporting point so as to be spaced apart from the holder 10.

### 1.3. Structure of Reel

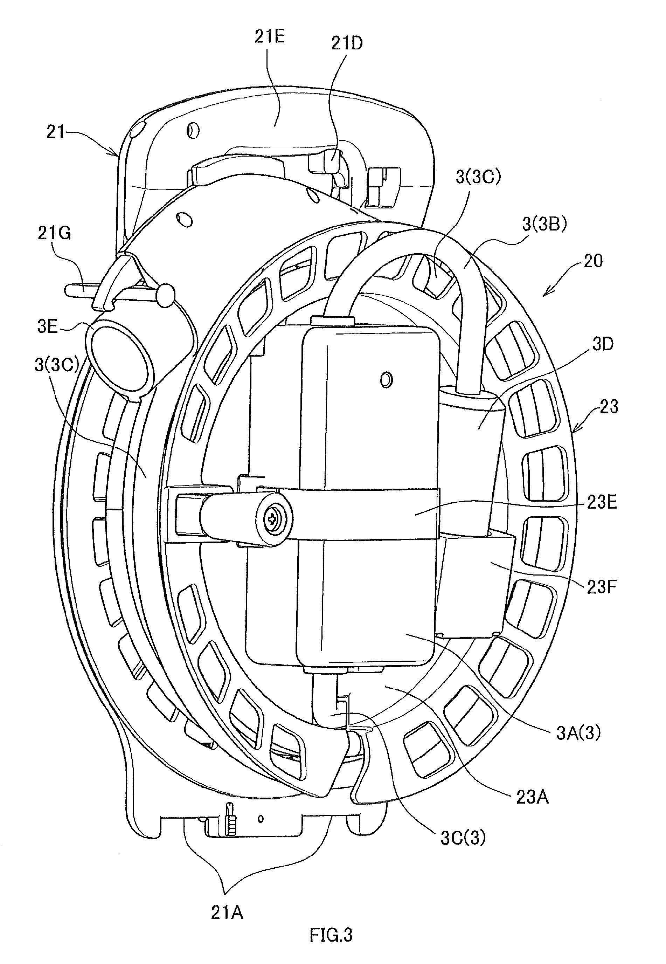

As shown in FIG. 3, the reel 20 is configured to include a rotating drum 23 to wind up the charging cable 3, the back plate 21 to rotatably support the rotating drum 23, and the like.

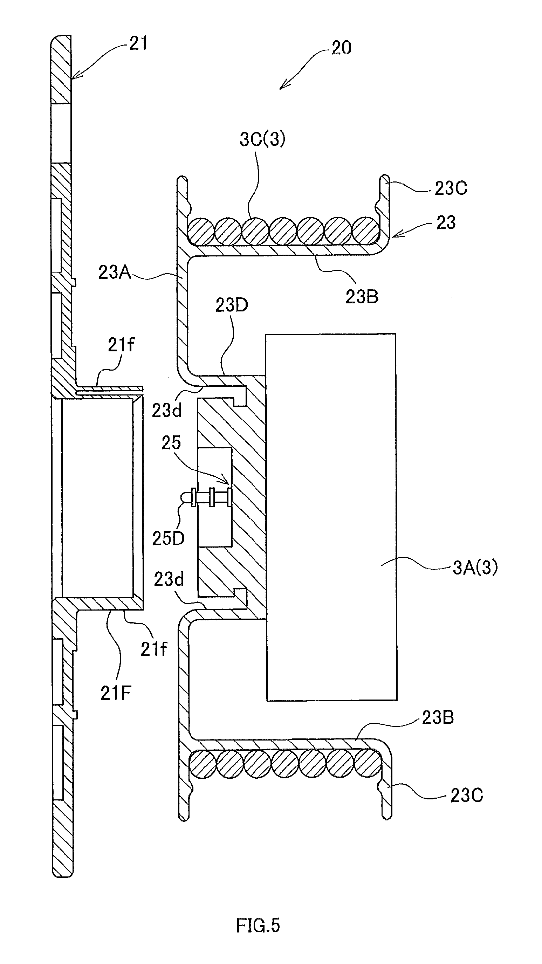

As shown in FIG. 5, the rotating drum 23 is configured to include a drum plate 23A of a disk shape, a wind-up rim 23B formed in a ring shape, a flange portion 23C of a brim-like shape provided to the wind-up rim 23B, and the like. In the present embodiment, the drum plate 23A, the wind-up rim 23B, the flange portion 23C, and the like are integrally formed of resin.

The drum plate 23A has a fitting portion 23D provided thereto. The fitting portion 23D is configured such that a support portion 21F having a cylindrical shape provided to the back plate 21 is fitted into the fitting portion 23D in a slidably contacting manner. The rotating drum 23 can rotate with respect to the back plate 21 due to the slidable contact between an inner periphery 23d of the fitting portion 23D and an outer periphery 21f of the support portion 21F.

As shown in FIG. 3, a fixing portion 23E, by which a charging control box 3A is fixed, is provided at an inner peripheral side of the wind-up rim 23B in the drum plate 23A. The charging control box 3A contains a built-in control circuit (CCID: Charge Circuit Interrupt Device, or the like) performing charging control. The charging control box 3A is provided in an electrical circuit (in an electrical path) connecting the charging power supply and the electrically-driven vehicle to each other.

In many cases, the charging control box 3A is supplied as part of the charging cable 3 by a vehicle manufacturer or the like. Hereinafter, the charging cable 3 situated closer to the charging power source in relation to the charging control box 3A is referred to as a terminal-side cable 3B, and the charging cable 3 situated closer to the electrically-driven vehicle in relation to the charging control box 3A is referred to as a wound-up-side cable 3C.

A terminal connector 3D for connection to a side of the power supply is provided at an end of the terminal-side cable 3B, whereas a vehicle-side connector 3E for connection to the electrically-driven vehicle is provided at an end of the wound-up-side cable 3C.

The charging cable 3 according to the present embodiment is configured to include the charging control box 3A, the terminal-side cable 3B, the wound-up-side cable 3C, the terminal connector 3D, the vehicle-side connector 3E, and the like.

A cable-side connector 23F to which the terminal connector 3D can be attached is provided on a side of the fixing portion 23E of the drum plate 23A, whereas, as shown in FIG. 4, a reel-side socket 25 is provided on a side of the holder 10 of the drum plate 23A. The reel-side socket 25 is electrically connected to the cable-side connector 23F, and can be fitted to the holder-side socket 11.

Therefore, when the holder-side socket 11 and the reel-side socket 25 are fitted to each other in a state in which the terminal connector 3D is attached to the cable-side connector 23F, the charging cable 3 and the side of the power supply become conductible with each other.

The back plate 21 has a locking hook portion 21G provided thereto that locks an end side of the wound-up-side cable 3C. Therefore, in a state in which the end side of the wound-up-side cable 3C is locked by the locking hook portion 21G, even when the rotating drum 23 rotates, there is no possibility that the wound-up-side cable 3C, which has been reeled in, becomes so loose.

### 1.4. Fit between Holder-side Socket and Reel-side Socket

As shown in FIG. 4, the reel-side socket 25 according to the present embodiment is provided on a rotational axis of the rotating drum 23, and rotates integrally with the rotating drum 23. On the other hand, the holder-side socket 11 is fixed to the holder 10, and thus, the holder-side socket 11 does not rotate even when the reel 20 is attached to the holder 10 and the holder-side socket 11 is fitted to the reel-side socket 25.

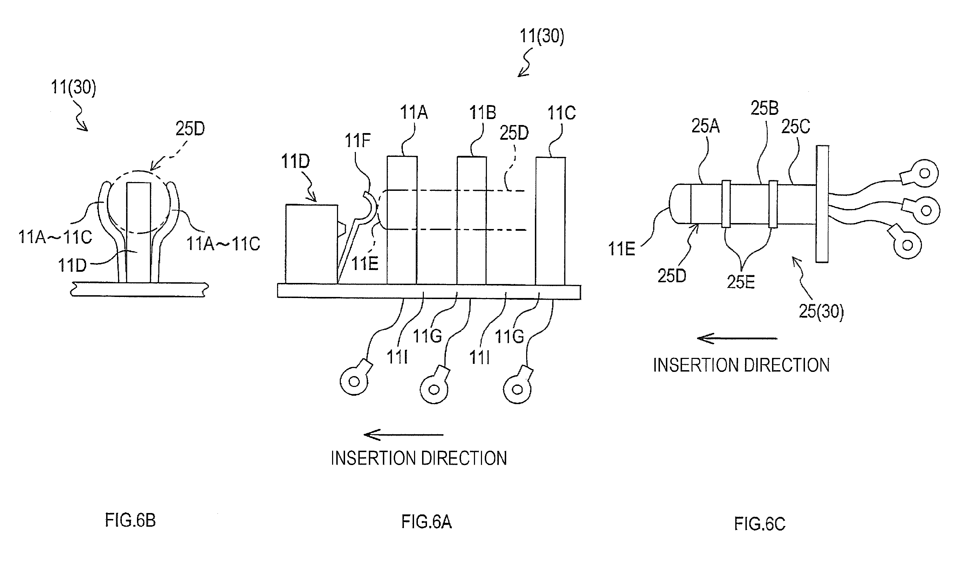

Thus, in the present embodiment, as shown in FIGS. 6A and 6B, fixed contacts 11A to 11C to be connected to a side of the charging power supply are provided to the holder-side socket 11, and as shown in FIG. 6C, movable contacts 25A to 25C displaceable in a slidably contacting manner with respect to the fixed contacts 11A to 11C are provided to the reel-side socket 25.

Specifically, an electrical contact provided to the holder-side socket 11 and an electrical contact provided to the reel-side socket 25 are configured to respectively include a plurality of electrical contacts (11A to 11C and 25A to 25C) as shown in FIGS. 6A to 6C. The fixed contacts 11A to 11C and the movable contacts 25A to 25C are both arranged so as to be spaced apart from one another in an insertion direction of the reel 20.

In the present embodiment, the fixed contacts and the movable contacts each include three electrical contacts because charging is performed by a three-wire single-phase alternate current of 200 V. The insertion direction of the reel 20 is the same as a direction of the rotational axis of the rotating drum 23.

As shown in FIG. 6C, each of the movable contacts 25A to 25C is an annular metal portion formed so as to circumferentially cover part of an outer periphery of a terminal rod 25D having a round bar-like shape formed of an electrical insulating material such as a resin. Provided at a leading end of the terminal rod 25D is a contacting portion 11E of a spherical shape formed of an electrical insulating material.

Each of the movable contacts 25A to 25C is provided discretely along a longitudinal direction of the terminal rod 25D so that an electrical insulating portion 25E is present between the movable contacts 25A to 25C in a region from the contacting portion 11E to a base side in the terminal rod 25D.

As shown in FIG. 6A, each of the fixed contacts 11A to 11C is arranged discretely in the insertion direction so that an electrical insulating portion 11J is present between the fixed contacts 11A to 11C, and as shown in FIG. 6B, the fixed contacts 11A to 11C slidably contact the movable contacts 25A to 25C, respectively, from a direction orthogonal to the insertion direction.

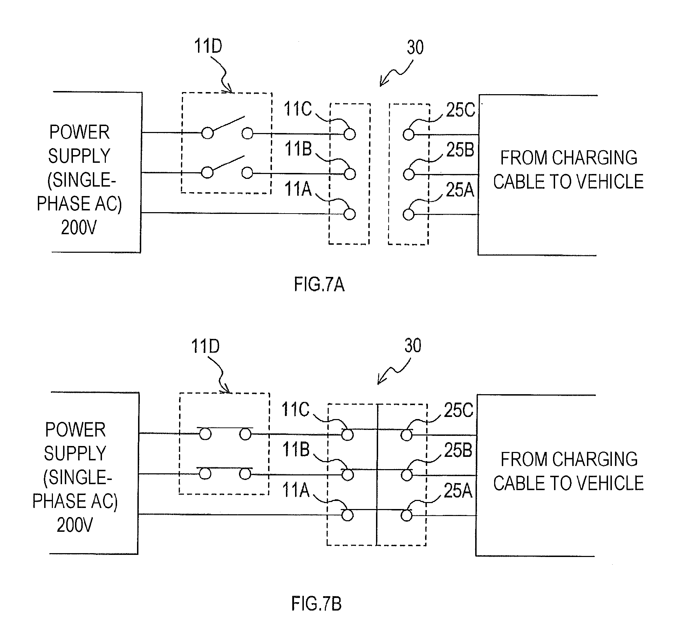

As shown in FIG. 6A, a power switch 11D that includes a microswitch or the like is provided in a position spaced toward a forward side in the insertion direction in relation to the fixed contacts 11A to 11C in the holder-side socket 11. As shown in FIG. 7A, the power switch 11D is a switch to open and close an electrical circuit connecting the charging power supply and the fixed contacts 11A to 11C to each other.

As shown in FIG. 6A, the power switch 11D is provided with a contacted portion 11F to be contacted by the contacting portion 11E when the reel 20 is attached to the holder 10. When the contacted portion 11F is pressed by the contacting portion 11E, the power switch 11D is closed to close the electrical circuit as shown in FIG. 7B, and thus, the movable contacts 25A to 25C and the fixed contacts 11A to 11C respectively become conductible to each other.

In other words, the contacting portion 11E, the contacted portion 11F, and the power switch 11D function as a switch portion 30 that enables conduction between the movable contacts 25A to 25C and the fixed contacts 11A to 11C, respectively, when the movable contacts 25A to 25C have reached a preset position with respect to the fixed contacts 11A to 11C.

In a case where the rotating drum 23 rotates and the reel-side socket 25 thereby rotates in a state in which the reel 20 is attached to the holder 10, the movable contacts 25A to 25C rotate while slidably contacting the fixed contacts 11A to 11C, respectively, and thus, conduction between the reel-side socket 25 and the holder-side socket 11 can be secured even when the rotating drum 23 rotates.

### 2. Features of Charging-Cable Storage Device according to the Present Embodiment

In the present embodiment, the charging cable 3 is stored in a wound-up state, and the reel 20 can be attached to and detached from the holder 10. Therefore, the holder 10 may be set in a place, such as a garage and a parking lot, where charging can be performed, and solely the reel 20 may be stored (loaded) in the trunk or the like.

In the present embodiment, the movable contacts 25A to 25C can slidably contact the fixed contacts 11A to 11C, and thus, the reel-side socket 25 can be fitted to the holder-side socket 11 no matter which position they are in, regardless of the position of the reel-side socket 25 with respect to the holder-side socket 11.

Therefore, even when the reel-side socket 25 rotates after the reel 20 is detached from the holder 10, a problem does not occur such as a failure to fit the reel-side socket 25 to the holder-side socket 11 when the reel 20 is being attached to the holder 10 on the next occasion.

Accordingly, in the present embodiment, by allowing the reel 20 to be attachable to and detachable from the holder 10, storability and loadability of the charging cable 3 can be improved. Furthermore, the reel-side socket 25 can be easily fitted to the holder-side socket 11, and workability for attaching the reel 20 can be improved.

In the present embodiment, the plurality of electrical contacts 11A to 11C and 25A to 25C are characterized in that they are each arranged so as to be spaced apart from one another in the insertion direction. Due to such a configuration, compared with a case where the plurality of electrical contacts 11A to 11C and 25A to 25C are each spaced apart from one another only in a direction orthogonal to the insertion direction of the reel 20, the dimension of the region parallel to such a spaced-apart direction can be suppressed from being increased.

The present embodiment is characterized by being provided with the switch portion 30 that enables conduction between the movable contacts 25A to 25C and the fixed contacts 11A to 11C when the movable contacts 25A to 25C have reached the preset position with respect to the fixed contacts 11A to 11C.

This can suppress occurrence of discharge or the like between the electrical contacts when the movable contacts come into and out of contact with the fixed contacts 11A to 11C while attaching the reel 20, in the present embodiment.

Specifically, in the case where the fixed contacts 11A to 11C are electrically connected to the side of the power supply, when the movable contacts 25A to 25C respectively come into and out of contact with the fixed contacts 11A to 11C in a state in which the movable contacts 25A to 25C and the fixed contacts 11A to 11C are conductible to each other, discharge or the like between the both electrical contacts is more likely to occur when the movable contacts 25A to 25C respectively come into and out of contact with the fixed contacts 11A to 11C. However, in the present embodiment, such a problem doest not occur as described above.

### (Second Embodiment)

In the first embodiment, the conduction state between the movable contacts 25A to 25C and the fixed electrical contacts 11A to 11C is switched by the power switch 11D, whereas the present second embodiment is an example in which the power switch 11D is not provided. In the present second embodiment, it is configured such that the fixed contacts 11A to 11C are displaced to a position allowing contact with the movable contacts 25A to 25C when the contacting portion 11E has reached a preset position.

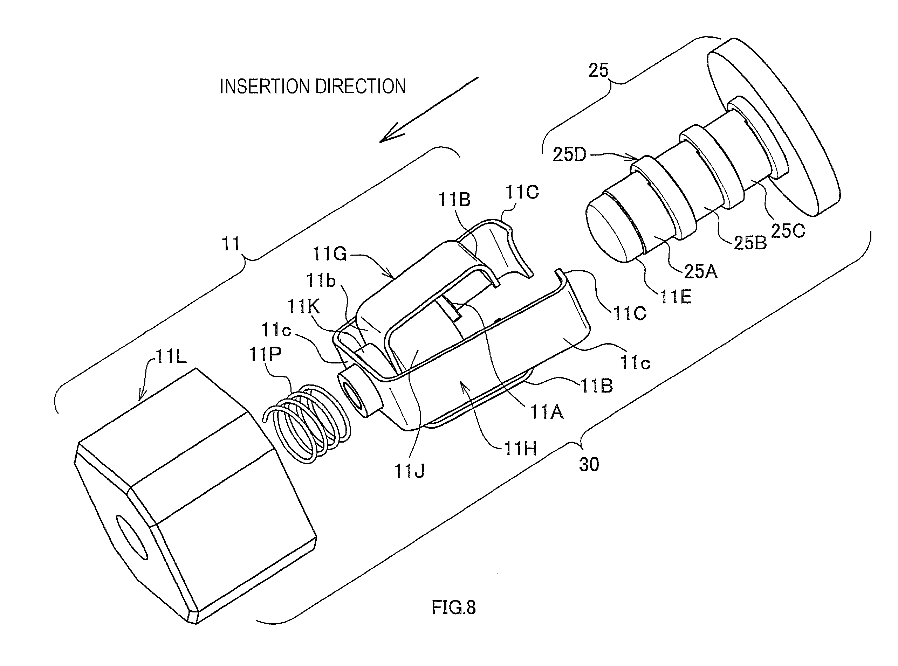

Specifically, as shown in FIG. 8, the fixed contacts 11B and 11C are respectively provided at a leading end side of spring members 11b and 11c having a substantially U shape opened at a side of the reel-side socket 25. Blade spring portions 11G and 11H, in the spring members 11b and 11c, respectively, extending toward the reel-side socket 25 are displaced between a position adjacent to the terminal rod 25D and a position spaced apart from the terminal rod 25D.

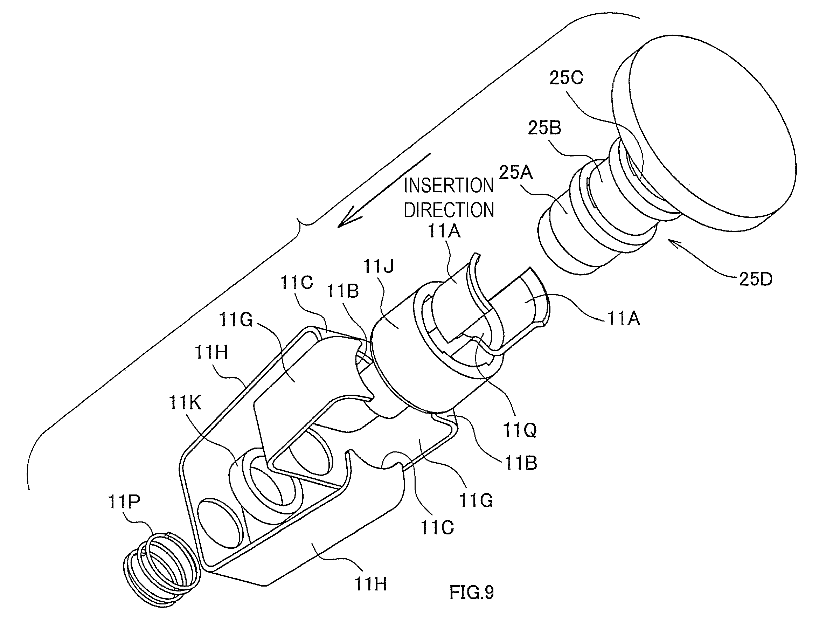

Since the fixed contact 11A is an electrical contact connected to a ground side, in the present second embodiment, when the reel-side socket 25 is fitted to the holder-side socket 11, the fixed contact 11A contacts the movable contact 25A without being displaced between a position adjacent to the terminal rod 25D and a position spaced apart from the terminal rod 25D. Thus, as shown in FIG. 9, the fixed contact 11A is formed into a cup-like shape, part of which is opened, and undergoes very little elastic deformation.

An insulating member 11J is a member to provide electrical insulation between the fixed contacts 11A and 11B, and an insulating member 11K is a member to provide electrical insulation between the fixed contacts 11B and 11C. The insulating members 11J and 11K are formed of an insulating material such as a resin.

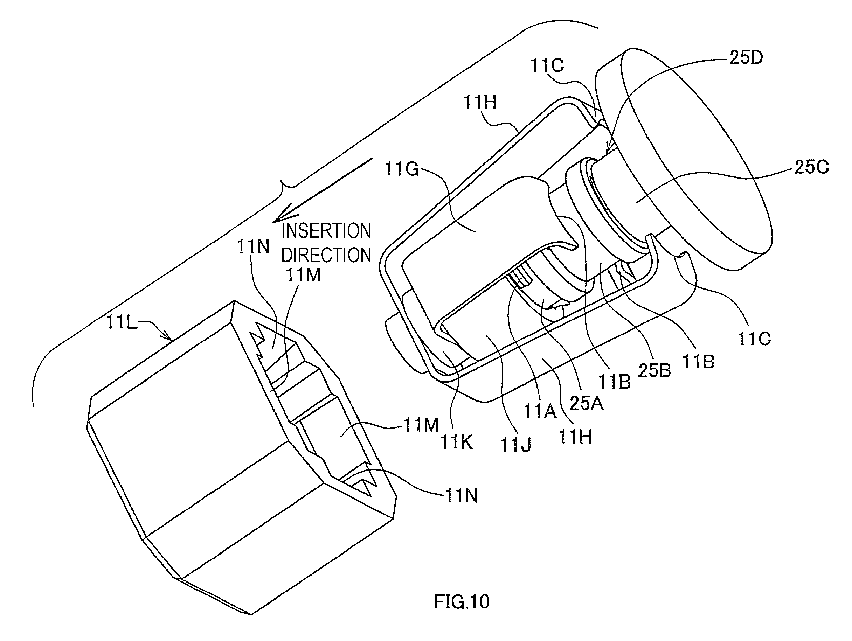

As shown in FIG. 10, a pressing member 11L is a member provided with tapered surfaces 11M and 11N that displace the blade spring portions 11G and 11H toward the terminal rod 25D. The tapered surfaces 11M and 11N are both inclined with respect to the insertion direction so as to come closer to the terminal rod 25D as proceeding toward a forward side of the insertion direction.

The fixed contacts 11A to 11C can be displaced along the tapered surfaces 11M and 11N (the pressing member 11L) in the insertion direction, within the pressing member 11L. As shown in FIG. 8, a return spring 11P applies an elastic force to the fixed contacts 11A to 11C in an opposite direction from the insertion direction.

Thus, when the reel-side socket 25, i.e., the terminal rod 25D, is fitted to the holder-side socket 11, firstly, the contacting portion 11E contacts an insertion direction front end portion 11Q (see FIG. 9) of the fixed contact 11A having a cup-like shape, and the fixed contact 11A and the movable contacts 25A contact with each other.

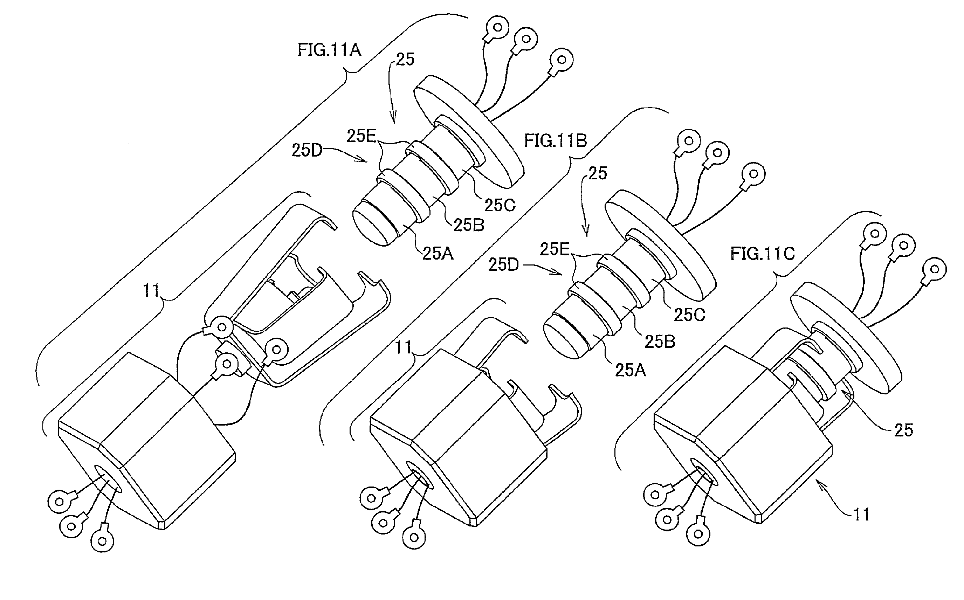

When the terminal rod 25D is further thrust to the forward side in the insertion direction in a state in which the contacting portion 11E is in contact with the insertion direction front end portion 11Q of the fixed contact 11A, the blade spring portions 11G and 11H are displaced toward the terminal rod 25D as shown in FIGS. 11A, 11B, and 11C in this order, and the fixed contacts 11B and 11C contact the movable contacts 25B and 25C, respectively.

Accordingly, in the present second embodiment, when the contacting portion 11E has reached the preset position, the fixed contacts 11A to 11C are displaced to a position allowing contact with the movable contacts 25A to 25C, respectively, and conduction between the movable contacts 25A to 25C and the fixed contacts 11A to 11C is enabled.

In other words, in the present second embodiment, the contacting portion 11E, the insertion direction front end portion 11Q forming the contacted portion, and the pressing member 11L function as the switch portion 30 that enables conduction between the movable contacts 25A to 25C and the fixed contacts 11A to 11C when the movable contacts 25A to 25C have reached the preset position with respect to the fixed contacts 11A to 11C.

### (Third Embodiment)

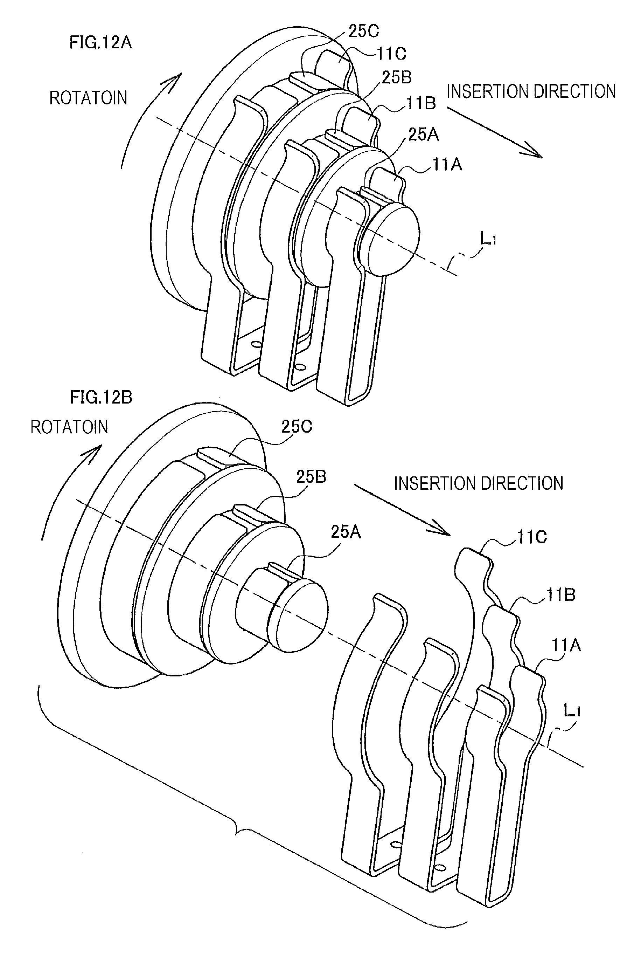

In the above-described embodiments, the plurality of electrical contacts 11A to 11C and 25A to 25C are each arranged so as to be spaced apart from one another only in the insertion direction. However, in the present third embodiment, as shown in FIG. 12, the plurality of electrical contacts 11A to 11C and 25A to 25C are each arranged so as to be spaced apart from one another in the insertion direction and in a direction (referred to as a radial direction) orthogonal to the insertion direction.

In other words, the fixed contacts 11A to 11C and the movable contacts 25A to 25C are arranged so as to be positioned closer to a rotational center axis L1 as being at a forward side in the insertion direction.

Since the switch portion 30 is not provided in the present third embodiment, it is preferred that the holder-side socket 11 is connected to the side of the power supply after the fit between the reel-side socket 25 and the holder-side socket 11 is completed.

### (Fourth Embodiment)

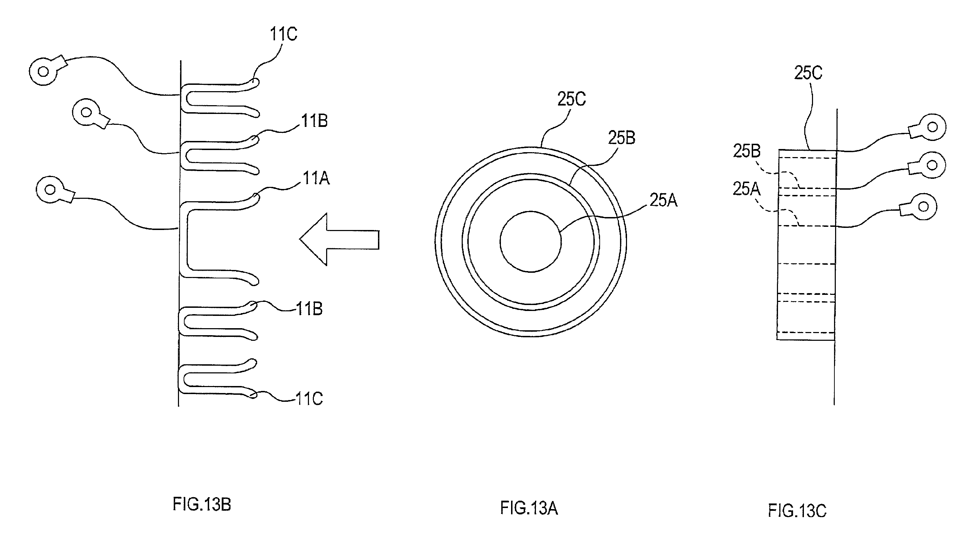

In the present fourth embodiment, as shown in FIG. 13, the plurality of electrical contacts 11A to 11C and 25A to 25C are each arranged so as to be spaced apart from one another only in the radial direction.

Specifically, as shown in FIGS. 13A and 13B, the movable contacts 25A to 25C include electrical contacts of an annular or cylindrical shape arranged concentrically, whereas the fixed contacts 11A to 11C include electrical contacts of a hairpin-like shape arranged along the radial direction.

Since the switch portion 30 is not provided in the present fourth embodiment similarly to the third embodiment, it is preferred that the holder-side socket 11 is connected to the side of the power supply after the fit between the reel-side socket 25 and the holder-side socket 11 is completed.

### (Fifth Embodiment)

The present fifth embodiment is an example in which a function to open and close the electrical circuit by means of the power switch 11D according to the first embodiment is added to the charging-cable storage device according to the third embodiment and the fourth embodiment.

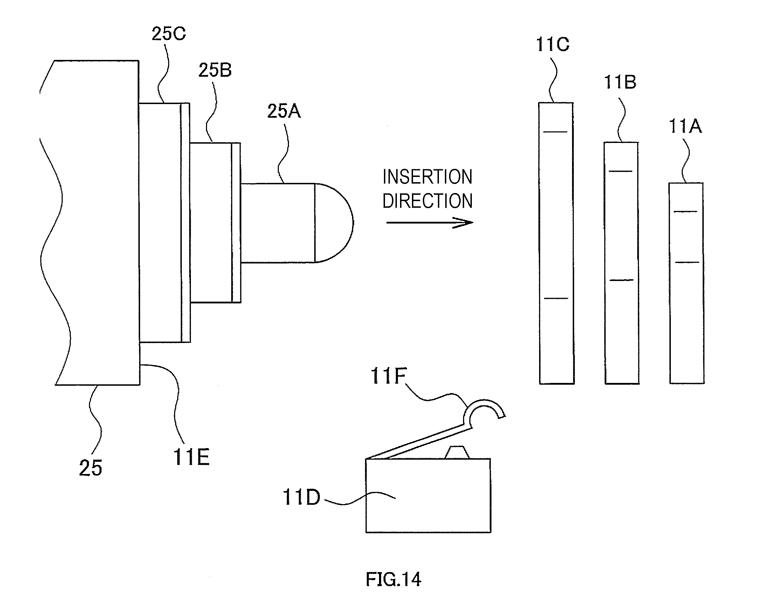

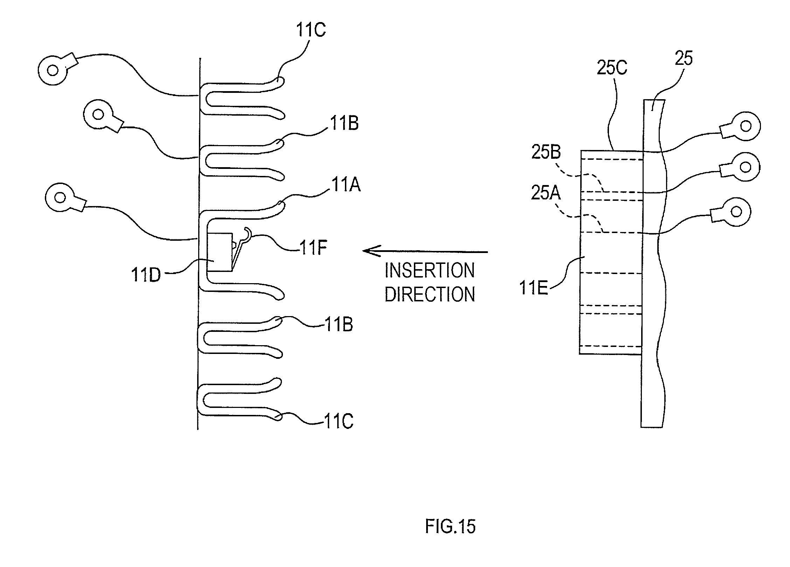

Specifically, as shown in FIGS. 14 and 15, the contacting portion 11E is provided to the reel-side socket 25, and the power switch 11D is provided to the holder-side socket 11.

FIG. 14 shows an example in which the function to open and close the electrical circuit is added to the storage device according to the third embodiment. FIG. 15 shows an example in which the function to open and close the electrical circuit is added to the storage device according to the fourth embodiment.

Due to such configurations, similarly to the first embodiment, the contacting portion 11E, the contacted portion 11F, and the power switch 11D function as the switch portion 30 that enables conduction between the movable contacts 25A to 25C and the fixed contacts 11A to 11C, respectively, when the movable contacts 25A to 25C have reached a preset position with respect to the fixed contacts 11A to 11C.

### (Sixth Embodiment)

In the above-described embodiments, the terminal connector 3D is electrically connected to the reel-side socket 25 via the cable-side connector 23F. On the other hand, the present sixth embodiment is an example in which the cable-side connector 23F and the reel-side socket 25 are not provided. In the present six embodiment, the terminal connector 3D is configured to be fitted to the holder-side socket 11 in a direct manner.

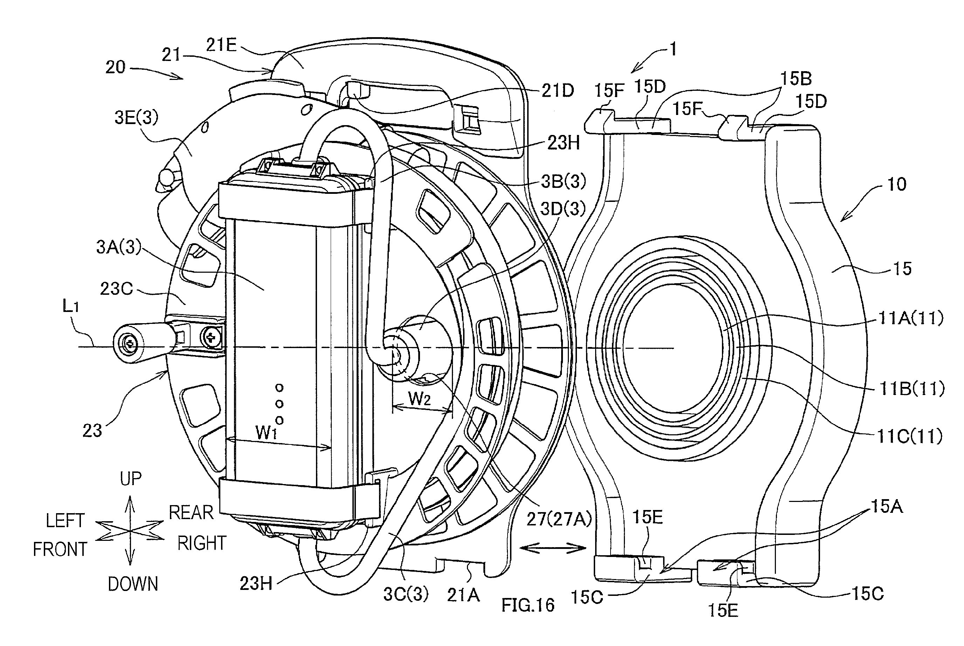

Specifically, in the present sixth embodiment, a plurality of fixing portions 23H to fix the charging control box 3A to the flange portion 23C are provided as shown in FIG. 16. The plurality of fixing portions 23H are arranged so that the center of volume of the charging control box 3A is positioned on the rotational center axis L1 of the rotating drum 23 (or in the vicinity of the rotational center axis L1). "The center of volume" means a point where a volume moment (a moment due to gravity when a density is assumed to be "1") is balanced.

In the present sixth embodiment, the center of volume is not positioned perfectly on the rotational center axis L1, and the center of volume deviates to the left side of the drawing sheet with respect to the rotational center axis L1. Specifically, "the center of volume of the charging control box 3A is positioned on the rotational center axis L1" means not only a case where the center of volume is positioned perfectly on the rotational center axis L1 as a matter of course, but also a case where the center of volume deviates from the rotational center axis L1 to the extent that a large rotational imbalance does not occur.

"The deviation to the extent that a large rotational imbalance does not occur" means, for example, a deviation approximately equal to or less than one-half of a sum of a width dimension W1 of the charging control box 3A and a width dimension W2 of the terminal connector 3D, in a case where the charging control box 3A has a rectangular tube-like shape.

A connector portion 27 for connection of the terminal connector 3D to the power supply side is provided in a position that is on the same side as a side on which the plurality of fixing portions 23H are positioned in the rotating drum 23 and that deviates with respect to the rotational center axis L1 in a direction orthogonal to the rotational center axis L1.

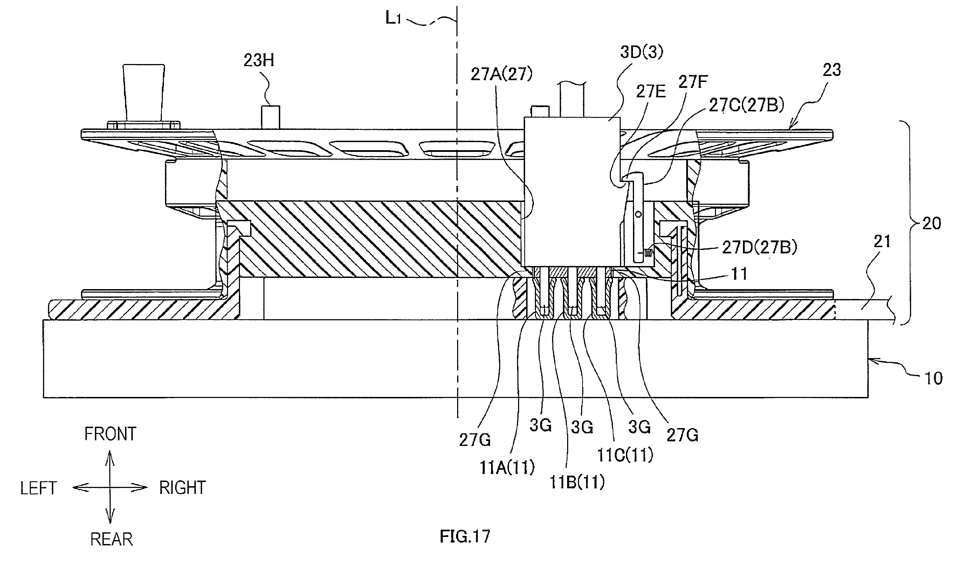

As shown in FIG. 17, an attachment port 27A for attachment of the terminal connector 3D to the holder-side socket 11 is provided in the connector portion 27. The attachment port 27A penetrates through the rotating drum 23 and the back plate 21 in a direction parallel to the rotational center axis L1, and thereby communicates with a side of the holder-side socket 11 of the holder 10.

When the terminal connector 3D is fitted to the holder-side socket 11 in a direct manner, terminals 3G of the terminal connector 3D slidably contact the fixed contacts 11A to 11C in the present sixth embodiment. That is, in the present sixth embodiment, the terminals 3G function as the movable contacts 25A to 25C.

The connector portion 27 has at least one locking portion 27B provided. The locking portion 27B suppresses the terminal connector 3D from falling off from the rotating drum 23, i.e., from the reel 20.

The locking portion 27B according to the present sixth embodiment is configured to include a locking hook 27C and a resilient portion 27D, for example. The locking hook 27C is formed in an arm-like shape as a whole, and one end thereof is formed in a hook-like shape. The locking hook 27C has a protrusion 27F to be engaged with a locked portion 27E provided on the terminal connector 3D. The protrusion 27F is provided at one end side of the locking hook 27C in a longitudinal direction thereof. A middle portion of the locking hook 27C in the longitudinal direction thereof is swingably coupled to the rotating drum 23.

The resilient portion 27D applies an elastic force that retains a locking state between the protrusion 27F and the locked portion 27E to the other end side of the locking hook 27C in the longitudinal direction thereof. The resilient portion 27D according to the present sixth embodiment includes at least one coil spring.

The attachment port 27A has, at a side of the holder-side socket 11 thereof, at least one protruding portion 27G provided that locks the terminal connector 3D inserted into the attachment port 27A. The protruding portion 27G includes a region protruding from an inner periphery of the attachment port 27A toward the center thereof.

Upon insertion of the terminal connector 3D into the attachment port 27A, the terminal connector 3D is locked by the protruding portion 27G, and thus, the terminal connector 3D is suppressed from penetrating out to a side of the holder 10. In addition, since the terminal connector 3D is in a state held between the protruding portion 27G and the locking hook 27C, the terminal connector 3D is suppressed from falling off from the reel 20.

### (Other Embodiments)

The present invention is characterized in that the fixed contacts 11A to 11C are provided to the holder 10 and the movable contacts 25A to 25C attachable to and detachable from the fixed electrical contacts 11A to 11C are provided to the reel 20, and thus, specific configurations of these electrical contacts 11A to 11C and 25A to 25C are not limited to the above-described embodiments.

It is also possible, technically, to provide the fixed contacts 11A to 11C to the reel 20 and to provide the movable electrical contacts 25A to 25C to the holder 10. However, such a configuration makes the structure of the charging-cable storage device complicated and leads to an increase in cost of manufacturing the charging-cable storage device. Therefore, such a configuration is not adopted in the above-described embodiments.

The above-described embodiments are founded on the premise that the power supply is a three-wire single-phase alternate current of 200 V, and the fixed contacts and the movable contacts include three contacts. However, the present invention is not limited to this, and the fixed contacts and the movable contacts may include two contacts or four or more contacts.

In the above-described embodiments, the switch portion 30 is provided in the case where the plurality of electrical contacts 11A to 11C and 25A to 25C are each arranged so as to be spaced apart from one another in the insertion direction. However, the present invention is not limited to this, and the switch portion 30 according to the second embodiment may be provided in the case where the plurality of electrical contacts 11A to 11C and 25A to 25C are each spaced apart from one another in the direction orthogonal to the insertion direction.

In the above-described embodiments, the charging cable 3 provided with the charging control box 3A is exemplified. However, the present invention is not limited to this, and can also be applied to the charging cable 3 not provided with the charging control box 3A.

The present invention only has to be consistent with the spirit of the invention described in the claims, and is not limited to the above-described embodiments.

## Claims

1. A charging-cable storage device configured to store a charging cable for use in an electrically-driven vehicle having an electric motor for traveling, the device comprising:
a holder-side socket provided with fixed contacts to be connected to a side of a charging power supply;
a holder provided with the holder-side socket;
a reel that is attachably and detachably attached to the holder and that comprises a rotating drum to wind up the charging cable; and
a reel-side socket that is provided to the reel and is provided with movable contacts to be displaced in a slidably contacting manner with respect to the fixed contacts in conjunction with a rotation of the rotating drum in a contact state with the fixed contacts.

2. The storage device according to claim 1,
wherein the fixed contacts and the movable contacts each comprise a plurality of electrical contacts, and
wherein the plurality of electrical contacts are each arranged so as to be spaced apart from one another at least either in an insertion direction of the reel or in a direction orthogonal to the insertion direction.

3. The storage device according to claim 2,
wherein the plurality of electrical contacts are each arranged so as to be spaced apart from one another at least in the insertion direction.

4. The storage device according to any one of claims 1 to 3, further comprising a switch portion that enables conduction between the movable contacts and the fixed contacts when the movable contacts have reached a preset position with respect to the fixed contacts.

5. The storage device according to claim 4,
wherein the fixed contacts are displaceable between a position in contact with the movable contacts and a position spaced apart from the movable contacts,
wherein the switch portion comprises:
a contacting portion provided to the reel; and
a contacted portion provided to the holder and to be contacted by the contacting portion when the reel is attached to the holder, and
wherein the fixed contacts are displaced to the position in contact with the movable contacts by allowing the contacting portion to contact the contacted portion.

6. The storage device according to claim 4,
wherein the switch portion comprises:
a contacting portion provided to the reel;
a contacted portion provided to the holder and to be contacted by the contacting portion when the reel is attached to the holder; and
a power switch that is provided to the holder and opens and closes an electrical circuit connecting the charging power supply and the fixed contacts to each other, and
wherein the power switch is closed when the contacting portion contacts the contacted portion.

7. The storage device according to claim 5 or 6,
wherein the reel is provided with a terminal portion having a bar-like shape extending along the insertion direction, and
wherein the terminal portion comprises the contacting portion provided at an extending direction leading end thereof, and comprises the movable contacts at a base side thereof in relation to the extending direction leading end.
